(19) Europäisches Patentamt / European Patent Office / Office européen des brevets

(11) **EP 3 932 524 A1**

(12) **EUROPEAN PATENT APPLICATION**
published in accordance with Art. 153(4) EPC

(43) Date of publication:
**05.01.2022 Bulletin 2022/01**

(21) Application number: **20762732.4**

(22) Date of filing: **25.02.2020**

(51) Int Cl.:
**B01D 53/26** (2006.01)  **B60T 17/00** (2006.01)
**F04B 41/02** (2006.01)

(86) International application number:
**PCT/JP2020/007466**

(87) International publication number:
**WO 2020/175467 (03.09.2020 Gazette 2020/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2019 JP 2019031988**

(71) Applicant: **Nabtesco Automotive Corporation
Tokyo 102-0093 (JP)**

(72) Inventors:
• **SUGIO Takuya
Tokyo 102-0093 (JP)**
• **YOKEDA Kazuya
Tokyo 102-0093 (JP)**

(74) Representative: **Grünecker Patent- und
Rechtsanwälte
PartG mbB
Leopoldstraße 4
80802 München (DE)**

(54) **AIR SUPPLY SYSTEM, CONTROL METHOD FOR AIR SUPPLY SYSTEM, AND CONTROL PROGRAM FOR AIR SUPPLY SYSTEM**

(57)     Provided is an air supply system and a control method for the air supply system that can suppress decreases in the performance of a drying agent. This air supply system (10) comprises: an air drying circuit (11) that is provided between a compressor (4), which uses power from an engine as a drive source for sending compressed air, and an air tank (30) for storing dried compressed air, and that comprises a filter containing a drying agent for capturing moisture (17); and an ECU (80) that controls the air drying circuit (11). On the basis of an assessment result in which the dryness state of the dried compressed air is assessed in a regenerative supply operation in which the compressor (4) is driven when the engine is in a no load state, and the compressed air is sent to the filter (17) and supplied to the air tank (30), the ECU (80) determines whether to perform a regeneration operation in which the dried compressed air stored in the air tank (30) is passed through the filter (17) in the reverse direction and the drain-off that passes through the filter (17) is discharged from a drain discharge port (27).

Fig.1

**Description**

TECHNICAL FIELD

The present disclosure relates to an air supply system, a control method for an air supply system, and a control program for an air supply system.

BACKGROUND ART

In vehicles such as trucks, buses, and construction machines, air pressure systems including a brake system and a suspension system and the like are controlled utilizing compressed air sent from a compressor. The compressed air contains liquid impurities such as moisture suspended in the atmosphere and oil for lubricating the interior of the compressor. If compressed air containing a large amount of moisture and oil enters into the air pressure system, it will lead to the occurrence of rust and swelling of rubber members or the like, and may be the cause of operational failure. Therefore, a compressed-air drying device that removes impurities such as moisture and oil from the compressed air is provided downstream of the compressor.

The compressed-air drying device is equipped with a desiccant and various valves. The compressed-air drying device performs a load operation (dehumidification operation) that removes moisture and the like from the compressed air. Dried compressed air generated by the dehumidification operation is stored in a reservoir portion. Further, a cleaning function of the compressed-air drying device decreases as an amount of dried compressed air passing through the device increases. Therefore, the compressed-air drying device performs an unload operation (regeneration operation) that removes, from the desiccant, oil and moisture adsorbed on the desiccant, and discharges the removed oil and moisture as drainage (for example, see Patent Document 1).

PRIOR ART DOCUMENT

Patent Document

Patent Document 1: Japanese Laid-Open Patent Publication No. 2010-201323

SUMMARY OF THE INVENTION

Problems that the Invention is to Solve

In this connection, in some compressed-air drying devices, compressed air is supplied from a compressor driven by an engine, and when performing regenerative supply, the compressor is driven when the engine is in a no-load state and compressed air is supplied. At the time of such regenerative supply, if dried compressed air stored in a reservoir portion has been consumed, there is a concern that regeneration of the desiccant will not be performed and consequently the performance of the desiccant will decrease.

An objective of the present disclosure is to provide an air supply system and a control method for an air supply system which can suppress a decrease in the performance of a desiccant.

Means for Solving the Problems

An air supply system that solves the aforementioned problem includes: an air drying circuit provided between a compressor for sending compressed air by using motive power of an engine as a driving source, and an air tank for storing dried compressed air, the air drying circuit having a filter including a desiccant for capturing moisture; and a control device for controlling the air drying circuit; wherein the control device is configured to, during a regenerative supply operation in which the compressor is driven when the engine is in a no-load state and the compressed air is sent to the filter and supplied to the air tank, determine whether or not to execute a regeneration operation which causes the dried compressed air stored in the air tank to pass through the filter in a reverse direction and discharges, from a discharge port, a fluid that passes through the filter, based on a determination result obtained by determining a state of dryness of the dried compressed air.

A control method for an air supply system that solves the aforementioned problem is a control method for an air supply system that includes: an air drying circuit provided between a compressor for sending compressed air by using motive power of an engine as a driving source, and an air tank for storing dried compressed air, the air drying circuit having a filter including a desiccant for capturing moisture; and a control device for controlling the air drying circuit. The method includes, during a regenerative supply operation in which the compressor is driven when the engine is in a no-load state and the compressed air is sent to the filter and supplied to the air tank, by the control device, determining whether or not to execute a regeneration operation which causes the dried compressed air stored in the air tank to pass through the filter in a reverse direction and discharges, from a discharge port, a fluid that passes through the filter, based on a determination result obtained by determining a state of dryness of the dried compressed air.

A control program for an air supply system that solves the aforementioned problem is a control program for an air supply system that includes: an air drying circuit provided between a compressor for sending compressed air by using motive power of an engine as a driving source, and an air tank for storing dried compressed air, the air drying circuit having a filter including a desiccant for capturing moisture; and a control device for controlling the air drying circuit; wherein the control program causes the control device to function as a regeneration operation execution determination portion that, during a regenerative supply operation in which the compressor is driven when the engine is in a no-load state and the compressed air is sent to the filter and supplied to the air tank, determines whether or not to execute a regeneration operation which causes the dried compressed air stored in the air tank to pass through the filter in a reverse direction and discharges, from a discharge port, a fluid that passes through the filter, based on a determination result obtained by determining a state of dryness of the dried compressed air.

At the time of the regenerative supply operation in which the compressor is driven when the engine is in the no-load state, since dried compressed air is consumed when travelling on a downward slope or the like, supply and consumption of dried compressed air are performed at the same time. In such a state, there is a concern that the regeneration operation will not be performed. Therefore, according to the configurations described above, at the time of the regenerative supply operation, whether or not to execute the regeneration operation is determined based on the determination result with respect to the state of dryness of the dried compressed air. Therefore, the regeneration operation is executed at the time when the regenerative supply operation has been executed and regeneration of the desiccant is insufficient. Hence, a decrease in the performance of the desiccant included in the filter can be suppressed.

With regard to the aforementioned air supply system, the control device may be configured to execute the regeneration operation when a pressure of the dried compressed air reaches a cut-out pressure at which the regeneration operation is performed, and to execute the regeneration operation when the pressure of the dried compressed air does not reach the cut-out pressure and the state of dryness of the dried compressed air does not satisfy a predetermined condition.

When supply and consumption of the dried compressed air are performed and the pressure in the supply circuit does not reach the cut-out pressure and supply of the dried compressed air is continued, the drying capacity of the filter will decrease. Therefore, according to the configuration described above, by executing the regeneration operation when the pressure in the supply circuit does not reach the cut-out pressure and the state of dryness of the dried compressed air does not satisfy a predetermined condition, the desiccant can be regenerated and a decrease in the performance of the desiccant can be suppressed.

With regard to the aforementioned air supply system, the control device may be configured to determine the state of dryness of the dried compressed air based on a humidity and a temperature of the dried compressed air stored in the air tank.

According to the configuration described above, by determining the state of dryness of the dried compressed air based on the humidity and the temperature, the state of dryness of the dried compressed air can be reliably determined.

With regard to the air supply system described above, the air supply system may include: a discharge valve that allows a branch passage connected to the air drying circuit, and the discharge port to communicate with each other; and a regeneration control valve that switches between a flow in a forward direction from the filter toward the air tank and a flow in the reverse direction from the air tank toward the filter; wherein the control device may be configured to control the discharge valve and the regeneration control valve.

According to the configuration described above, the regenerative supply operation and the regeneration operation can be performed by the control device performing control of the discharge valve and the regeneration control valve.

ADVANTAGEOUS EFFECT OF INVENTION

According to the present disclosure, a decrease in the performance of a desiccant can be suppressed.

BRIEF DESCRIPTION OF THE DRAWINGS

[Figure 1] Figure 1 is a configuration diagram illustrating a schematic configuration of a first embodiment of an air supply system.

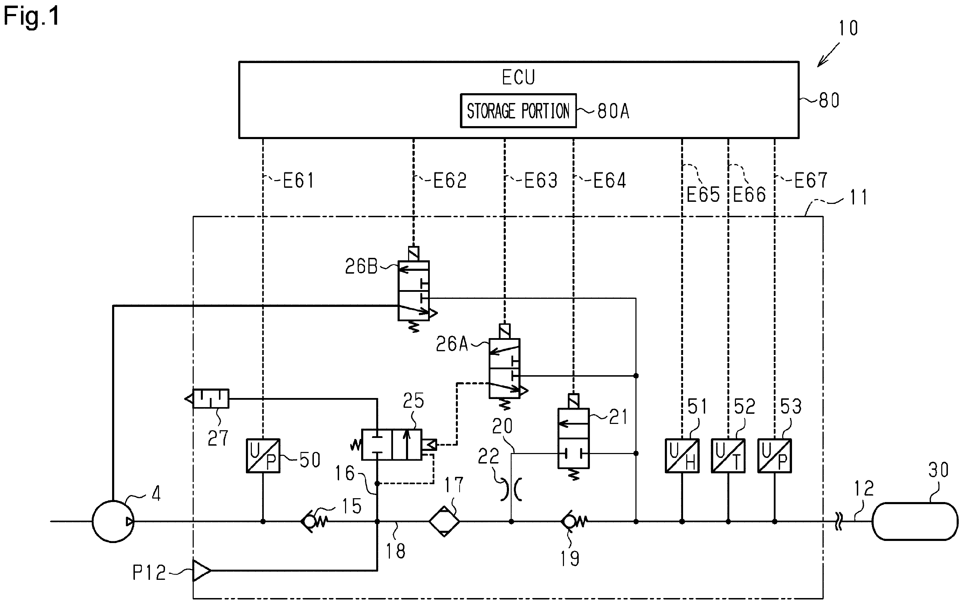

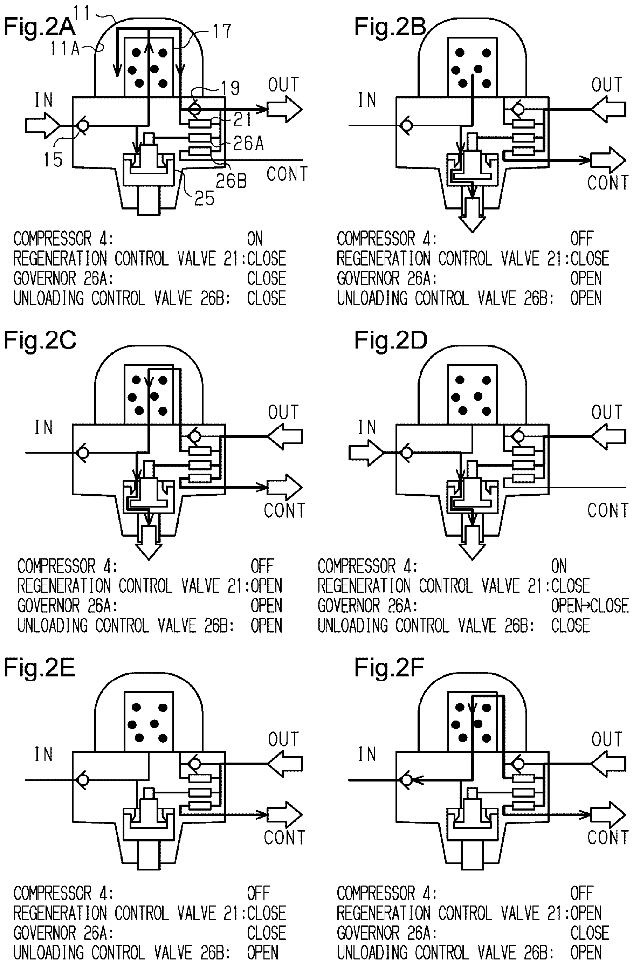

[Figure 2] Figure 2A is a diagram illustrating a first operation mode and a seventh operation mode of an air drying circuit of the embodiment illustrated in Figure 1; Figure 2B is a diagram illustrating a second operation mode of the air drying circuit of the embodiment illustrated in Figure 1; Figure 2C is a diagram illustrating a third operation mode and an eighth operation mode of the air drying circuit of the embodiment illustrated in Figure 1; and Figure 2D to Figure 2F are diagrams illustrating fourth to sixth operation modes of the air drying circuit of the embodiment illustrated in Figure 1, respectively.

[Figure 3] Figure 3 is a transition diagram illustrating a transition of operations of the air drying circuit of the embodiment illustrated in Figure 1.

[Figure 4] Figure 4 is a flowchart illustrating a transition from the first operation mode of the air drying circuit of the embodiment illustrated in Figure 1.

[Figure 5] Figure 5 is a flowchart illustrating transitions from the second operation mode and the third operation mode of the air drying circuit of the embodiment illustrated in Figure 1.

[Figure 6] Figure 6 is a flowchart illustrating a transition from the fifth operation mode of the air drying circuit of the embodiment illustrated in Figure 1.

[Figure 7] Figure 7 is a flowchart illustrating a transition from the seventh operation mode of the air drying circuit of the embodiment illustrated in Figure 1.

[Figure 8] Figure 8 is a flowchart illustrating a transition from the eighth operation mode of the air drying circuit of the embodiment illustrated in Figure 1.

MODES FOR CARRYING OUT THE INVENTION

An embodiment of an air supply system will now be described with reference to Figure 1 to Figure 8. The air supply system is installed in a vehicle such as a truck, a bus, or a construction machine. Dried compressed air supplied by the air supply system is used for pneumatic equipment such as a brake system installed in the vehicle.

<Air supply system 10>

An air supply system 10 will now be described with reference to Figure 1. The air supply system 10 includes a compressor 4, an air drying circuit 11, and an ECU 80 (Electronic Control Unit) that serves as a control device.

The ECU 80 is connected to the air drying circuit 11 through a plurality of wirings E61 to E67. The ECU 80 includes an arithmetic portion, a communication interface portion, a volatile storage portion, and a nonvolatile storage portion. The arithmetic portion is a computer processor, and is configured to control the air drying circuit 11 according to an air supply program stored in the nonvolatile storage portion (storage medium). At least a part of the processing to be executed by the arithmetic portion may be realized by a circuit such as an ASIC. The air supply program may be executed by one computer processor, or may be executed by a plurality of computer processors. The ECU 80 also includes a storage portion 80A that stores a result of operation of the air drying circuit 11. The storage portion 80A is a nonvolatile storage portion or a volatile storage portion, and may be the same as or different from the storage portion in which the aforementioned control program is stored.

The ECU 80 is connected through an in-vehicle network such as a CAN (Controller Area Network) to other ECUs (not illustrated) mounted in the vehicle, for example, an engine ECU and a brake ECU. The ECU 80 acquires information indicating a vehicle state from those ECUs. The information indicating the vehicle state includes, for example, information indicating whether the ignition switch is off, the vehicle speed, and information pertaining to driving of the engine.

A state of the compressor 4 is switched, based on an instruction value from the ECU 80, between an operation state (load operation) in which air is compressed and sent and a non-operation state (idling operation) in which compression of air is not performed. The compressor 4 is operated by motive power transmitted from a rotary drive source such as an engine.

The air drying circuit 11 is a so-called "air dryer". The air drying circuit 11 is connected to the ECU 80, and moisture and the like included in compressed air sent from the compressor 4 during a load operation is removed from the compressed air by the air drying circuit 11. The air drying circuit 11 sends the compressed air after drying (hereinafter, referred to as "dried compressed air") to a supply circuit 12. The dried compressed air that is supplied to the supply circuit 12 is stored in an air tank 30.

The dried compressed air stored in the air tank 30 is supplied to pneumatic equipment such as a brake system installed in the vehicle. For example, in a case where the frequency at which the brakes are operated is high, such as when the vehicle travels on a downward slope or through an urban area, a consumed amount of the dried compressed air stored in the air tank 30 is large. In contrast, in a case where the frequency at which the brakes are operated is low, the consumed amount of the dried compressed air stored in the air tank 30 is small.

The air drying circuit 11 has a maintenance port P12. The maintenance port P12 is a port that is used for supplying air to the air drying circuit 11 when performing maintenance.

<Air drying circuit 11>

The air drying circuit 11 includes a filter 17 arranged inside a case 11A (see Figure 2A) or the like. The filter 17 is provided partway along an air supply passage 18 which connects the compressor 4 and the supply circuit 12. Note that, the filter 17 includes a desiccant. Further, in addition to the desiccant, the filter 17 may also include an oil trap portion which traps oil. The oil trap portion may be a material of any kind as long as the material is capable of trapping oil while allowing air to pass therethrough, such as a foam such as urethane foam, a metal material having a large number of air holes, or a glass fiber filter.

The filter 17 causes compressed air sent from the compressor 4 to pass through the desiccant to thereby remove moisture contained in the compressed air from the compressed air and thus dry the compressed air. Further, the desiccant or the oil trap portion traps oil contained in the compressed air to thereby clean the compressed air. The compressed air that passed through the filter 17 is supplied to the supply circuit 12 via a downstream check valve 19 as a check valve that permits only a flow of air to the downstream side with respect to the filter 17. That is, when the filter 17 side is taken as upstream and the supply circuit 12 side is taken as downstream, the downstream check valve 19 only permits a flow of air from upstream to downstream. Note that, the downstream check valve 19 has a predetermined valve opening pressure (sealing pressure), and therefore when compressed air flows, the upstream pressure is higher than the downstream pressure by an amount corresponding to the valve opening pressure.

Further, on the downstream side of the filter 17, a bypass channel 20 as a bypass for bypassing the downstream check valve 19 is provided in parallel with the downstream check valve 19. A regeneration control valve 21 is provided in the bypass channel 20.

The regeneration control valve 21 is an electromagnetic valve that is controlled by the ECU 80. The ECU 80 switches operations of the regeneration control valve 21 by controlling to switch the power of the regeneration control valve 21 on and off (driving/non-driving) via the wiring E64. The regeneration control valve 21 is closed in a state in which the power is off and thereby seals the bypass channel 20, and is opened in a state in which the power is on and thereby opens the bypass channel 20. The ECU 80 receives, for example, the value of the air pressure inside the air tank 30, and actuates the regeneration control valve 21 when the value of the air pressure exceeds a predetermined range.

In the bypass channel 20, an orifice 22 is provided between the regeneration control valve 21 and the filter 17. When the regeneration control valve 21 is energized, dried compressed air on the supply circuit 12 side is sent to the filter 17 via the bypass channel 20 in a state in which the flow rate is regulated by the orifice 22. The dried compressed air sent to the filter 17 flows back from downstream of the filter 17 toward upstream thereof so as to pass through the filter 17. Such a process is an operation that regenerates the filter 17 and is referred to as a "dryer regeneration operation". At such time, because the dried compressed air sent to the filter 17 is dried and cleaned air that has passed through the filter 17 and the like from the air supply passage 18 and supplied to the supply circuit 12, the dried compressed air can remove moisture and oil trapped in the filter 17 and the like from the filter 17. In normal control, the ECU 80 opens the regeneration control valve 21 when the pressure inside the air tank 30 reaches an upper limit value (cut-out pressure). On the other hand, when the pressure inside the air tank 30 reaches a lower limit value (cut-in pressure), the ECU 80 closes the regeneration control valve 21 that has been opened.

A branch passage 16 branches from a section between the compressor 4 and the filter 17. A drainage discharge valve 25 is provided in the branch passage 16, and a drainage discharge port 27 is connected to the end of the branch passage 16.

Drainage that is a fluid containing moisture and oil removed from the filter 17 is sent together with compressed air to the drainage discharge valve 25. The drainage discharge valve 25 is a pneumatically driven valve that is driven by air pressure, and is provided between the filter 17 and the drainage discharge port 27, in the branch passage 16. The drainage discharge valve 25 is a two-port, two-position valve that changes positions between a closed position and an open position. When in the open position, the drainage discharge valve 25 sends drainage to the drainage discharge port 27. The drainage discharged from the drainage discharge port 27 may be collected by an oil separator (not shown). Note that, the drainage corresponds to a fluid that passes through the filter 17 in the reverse direction.

The drainage discharge valve 25 is controlled by a governor 26A. The governor 26A is an electromagnetic valve that is controlled by the ECU 80. The ECU 80 switches operations of the governor 26A by controlling to switch the power of the governor 26A on and off (driving/non-driving) via the wiring E63. When the power of the governor 26A is switched on, the governor 26A inputs an air pressure signal to the drainage discharge valve 25 to open the drainage discharge valve 25. Further, when the power of the governor 26A is switched off, the governor 26A opens the drainage discharge valve 25 to the atmospheric pressure without inputting the air pressure signal to thereby cause the drainage discharge valve 25 to close.

In a state in which the air pressure signal is not being input from the governor 26A, the drainage discharge valve 25 is maintained at the closed position, and upon the air pressure signal being input from the governor 26A, the drainage discharge valve 25 switches to the open position. Further, if the pressure of an input port connected to the compressor 4 in the drainage discharge valve 25 exceeds an upper limit value, the drainage discharge valve 25 is forcedly switched to the open position.

An upstream check valve 15 is provided between the compressor 4 and the filter 17 and between the compressor 4 and the branch passage 16. When the compressor 4 side is referred to as "upstream" and the filter 17 side is referred to as "downstream", the upstream check valve 15 permits only the flow of air from the upstream side toward the downstream side. The upstream check valve 15 has a predetermined valve opening pressure (sealing pressure). Therefore, when compressed airflows, the upstream pressure becomes higher than the downstream pressure by an amount corresponding to the valve opening pressure. Note that, upstream of the upstream check valve 15, a reed valve is provided in the outlet of the compressor 4. The branch passage 16 and the filter 17 are provided downstream of the upstream check valve 15.

<Compressor 4>

The compressor 4 is controlled by an unloading control valve 26B. The unloading control valve 26B is an electromagnetic valve that is controlled by the ECU 80. The ECU 80 switches operations of the unloading control valve 26B by controlling to switch the power of the unloading control valve 26B on and off (driving/non-driving) via the wiring E62. When the power of the unloading control valve 26B is switched off, the unloading control valve 26B switches to an open position to open a channel between the unloading control valve 26B and the compressor 4 to the atmosphere. Further, when the power of the unloading control valve 26B is switched on, the unloading control valve 26B switches to a supply position and sends an air pressure signal composed of compressed air to the compressor 4.

A state of the compressor 4 switches to a non-operation state (idling operation) upon the air pressure signal being input from the unloading control valve 26B. For example, when the pressure of the supply circuit 12 has reached the cut-out pressure, a supply of dried compressed air is not required. When the pressure on the supply circuit 12 side reaches the cut-out pressure and the ECU 80 switches on the power of the unloading control valve 26B (drives the unloading control valve 26B), the unloading control valve 26B switches to the supply position. By this means, an air pressure signal is supplied to the compressor 4 from the unloading control valve 26B, and the state of the compressor 4 switches to a non-operation state.

<Sensors>

A pressure sensor 50 is provided between the compressor 4 and the upstream check valve 15. The pressure sensor 50 is connected to the air supply passage 18, and measures the air pressure in the air supply passage 18 and transmits the measured result to the ECU 80 through the wiring E61.

A humidity sensor 51 and a temperature sensor 52 are provided between the downstream check valve 19 and the supply circuit 12. The humidity sensor 51 measures the humidity in the dried compressed air on the downstream side of the filter 17, and outputs the measured result to the ECU 80 through the wiring E65. The temperature sensor 52 measures the temperature of the dried compressed air on the downstream side of the filter 17, and outputs the measured result to the ECU 80 through the wiring E66. The ECU 80 determines the state of dryness of the dried compressed air based on the humidity and the temperature of the dried compressed air which were input from the humidity sensor 51 and the temperature sensor 52. That is, the humidity and the temperature of the dried compressed air are indicators which indicate the state of dryness of the dried compressed air.

The ECU 80 calculates a moisture amount contained in supply air based on the humidity and the temperature when supplying dried compressed air to the air tank 30, and calculates a moisture reference amount contained in tank air based on the humidity and the temperature during regeneration which causes dried compressed air to flow back from the air tank 30. The moisture amount contained in tank air is determined using equation (1). Note that, the moisture amount contained in supply air is a moisture amount fed into the air tank 30 during the supply operation, and can be calculated based on the humidity and the temperature during the supply operation and a supply air amount during supply cycle. The moisture reference amount contained in tank air is a moisture amount present within the air tank 30 when the moisture amount is updated, and can be calculated based on the humidity and the temperature or the moisture amount contained in tank air at the time of regeneration. The moisture amount contained in consumed air is a moisture amount sent from the air tank 30 due to consumption of the dried compressed air, and can be calculated based on the moisture amount contained in tank air and an air consumption amount during consumption cycle.

(Moisture amount contained in tank air) = (moisture reference amount contained in tank air) + (amount of change in moisture contained in tank air)...(1)

(Amount of change in moisture contained in tank air) = (moisture amount contained in supply air) - (moisture amount contained in consumed air)

In addition, a pressure sensor 53 is provided between the downstream check valve 19 and the supply circuit 12. The pressure sensor 53 is provided, for example, to enable detection of the air pressure in the air tank 30 in which the dried compressed air is stored, and is connected to the ECU 80 through the wiring E67. The pressure between the downstream check valve 19 and the supply circuit 12 is the same as the pressure in the air tank 30, and the detection result of the pressure sensor 53 can be used as the value of the pressure in the air tank 30. Note that, the pressure sensor 53 may be provided in the supply circuit 12 or may be provided in the air tank 30.

<Description of operations of air drying circuit 11>

As illustrated in Figures 2A to 2F, the air drying circuit 11 has a plurality of operation modes which include at least a first operation mode to an eighth operation mode.

(First operation mode)

As illustrated in Figure 2A, the first operation mode is a mode for performing a "supply" operation in which normal dehumidification (loading) is performed. In the first operation mode, the regeneration control valve 21 and the unloading control valve 26B are each closed (described as "CLOSE" in the drawing), and the governor 26A is set to an open position in which the governor 26A does not input an air pressure signal to the compressor 4 (described as "CLOSE" in the drawing). At this time, power is not supplied to the regeneration control valve 21, the governor 26A, and the unloading control valve 26B. Further, the governor 26A and the unloading control valve 26B open ports of the compressor 4 and the drainage discharge valve 25, which are connected to the downstream side of the governor 26A and the unloading control valve 26B, to the atmosphere, respectively. In the first operation mode, when compressed air is being supplied from the compressor 4 (described as "ON" in the drawing), moisture and the like is removed at the filter 17, and the compressed air is supplied to the supply circuit 12.

(Second operation mode)

As illustrated in Figure 2B, the second operation mode is a mode for performing a "purge" operation that causes dried compressed air inside the air drying circuit 11 to pass through the filter 17 to purge the filter 17. In the second operation mode, the regeneration control valve 21 is closed, and the governor 26A and the unloading control valve 26B are each opened (described as "OPEN" in the drawing). At such time, power is supplied to each of the governor 26A and the unloading control valve 26B, and the ports of the compressor 4 and the drainage discharge valve 25, which are connected to the downstream side of the governor 26A and the unloading control valve 26B, are each connected to the upstream side (supply circuit 12 side). By this means, the compressor 4 switches to a non-operation state (described as "OFF" in the drawing), and the drainage discharge valve 25 is opened. As a result, dried compressed air present between the downstream check valve 19 and the filter 17 flows (flows back) through the filter 17 in the reverse direction to the direction of the flow of air in the first operation mode (supply), and moisture and the like that had been trapped by the filter 17 is discharged from the drainage discharge port 27 as drainage. Further, the air pressure of the filter 17 and the air supply passage 18 is released to the atmospheric pressure.

(Third operation mode)

As illustrated in Figure 2C, the third operation mode is a mode for performing a "regeneration" operation that regenerates the filter 17. In the third operation mode, the regeneration control valve 21 and the unloading control valve 26B are each opened, and the governor 26A is set to an input position. At this time, in addition to the governor 26A and the unloading control valve 26B, power is also supplied to the regeneration control valve 21. In the third operation mode, the compressor 4 is placed in a non-operation state, and dried compressed air in the supply circuit 12 or stored in the air tank 30 is caused to flow back through the filter 17, and is discharged from the drainage discharge port 27. By this means, moisture and the like trapped in the filter 17 is removed. Whilst the second operation mode and the third operation mode are each a mode that purges the filter 17, the third operation mode differs from the second operation mode at least in the respect that the regeneration control valve 21 is opened. By this means, in the third operation mode, dried compressed air inside the air tank 30 can be caused to pass through the filter 17 via the supply circuit 12 and the bypass channel 20. Therefore, an effect of purging the filter 17 is greater than in the second operation mode. Further, in the third operation mode also, the air pressure of the filter 17 and the air supply passage 18 is released to the atmospheric pressure.

(Fourth operation mode)

As illustrated in Figure 2D, the fourth operation mode is a mode for performing an "oil cut" operation in which the compressed air supplied from the compressor 4 is discharged while operating the compressor 4. When the compressor 4 is in a non-operation state, oil may store in a compression chamber of the compressor 4. If the state of the compressor 4 is switched to an operation state in a state in which oil has stored inside the compression chamber, the amount of oil contained in the compressed air sent from the compression chamber may increase. The oil cut operation is executed for the purpose of discharging this compressed air containing an excessive amount of oil through the drainage discharge valve 25 in order to reduce the load on the filter 17. In the fourth operation mode, as well as closing each of the regeneration control valve 21 and the unloading control valve 26B, the governor 26A is opened for a fixed time period and thereafter is closed. In the fourth operation mode, when the state of the compressor 4 is the operation state, the compressed air supplied by the compressor 4 is discharged from the drainage discharge port 27 for a fixed time period. Therefore, the occurrence of a situation in which the trapped amount of moisture and the trapped amount of oil in the filter 17 increase immediately after the compressor 4 is switched from a non-operation state to an operation state can be suppressed. The oil cut operation can also be performed when a rotational speed of the engine increases in the operation state and when the oil content from the compressor 4 increases when there is a high load on the engine or the like.

(Fifth operation mode)

As illustrated in Figure 2E, the fifth operation mode is a mode for performing a "purge-free supply stopping" operation that stops the compressor 4 without performing the purge operation. In the fifth operation mode, the regeneration control valve 21 and the governor 26A are each closed, and the unloading control valve 26B is opened. In the fifth operation mode, when the compressor 4 is in a non-operation state, the air pressure is maintained by not allowing compressed air or dried compressed air remaining in the air supply passage 18 or the desiccant of the filter 17 to be discharged from the drainage discharge port 27.

(Sixth operation mode)

As illustrated in Figure 2F, the sixth operation mode is a mode for performing a "compressor assist" operation in which a pressurization process is performed. In the sixth operation mode, the regeneration control valve 21 and the unloading control valve 26B are each opened, and the governor 26A is set to the open position. In the sixth operation mode, when the compressor 4 is in a non-operation state, by supplying compressed air in the supply circuit 12 (causing the compressed air to flow back) to the air supply passage 18 and into the desiccant of the filter 17, the pressure of the air supply passage 18 and the filter 17 is made higher than the atmospheric pressure to thereby maintain the back pressure (air pressure) of the upstream check valve 15 at a pressure that is higher than the atmospheric pressure. Hence, the generation of negative pressure inside a cylinder can be suppressed and a reduction in the operation load of the compressor 4 during the idling operation can be achieved. Specifically, when the compressor 4 is performing an idling operation, the drainage discharge valve 25 is sealed so that the air pressure in the desiccant of the filter 17 and inside the air supply passage 18 is maintained at a higher pressure than the atmospheric pressure by the compressed air supplied by the compressor 4.

(Seventh operation mode)

As illustrated in Figure 2A, the seventh operation mode is a mode for performing a "regenerative supply" operation in which dehumidification (loading) is performed during regenerative operation in which the compressor 4 is driven when the engine is in a no-load state. In the seventh operation mode, similarly to the first operation mode, the regeneration control valve 21, the governor 26A, and the unloading control valve 26B are each closed (described as "CLOSE" in the drawing).

(Eighth operation mode)

As illustrated in Figure 2C, the eighth operation mode is a mode for performing a "forced regeneration" process that forcedly regenerates the filter 17. In the eighth operation mode, similarly to the third operation mode, the regeneration control valve 21, the governor 26A, and the unloading control valve 26B are each opened.

(Transition between operation modes)

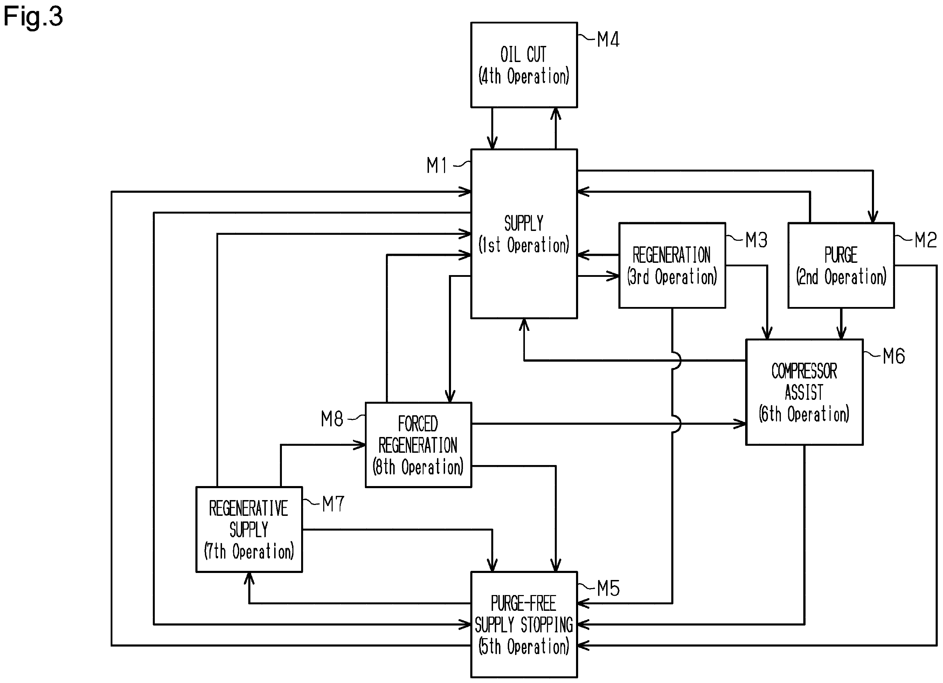

As illustrated in Figure 3, the eight operation modes which the air drying circuit 11 has are changed based on respective determinations made by the ECU 80.

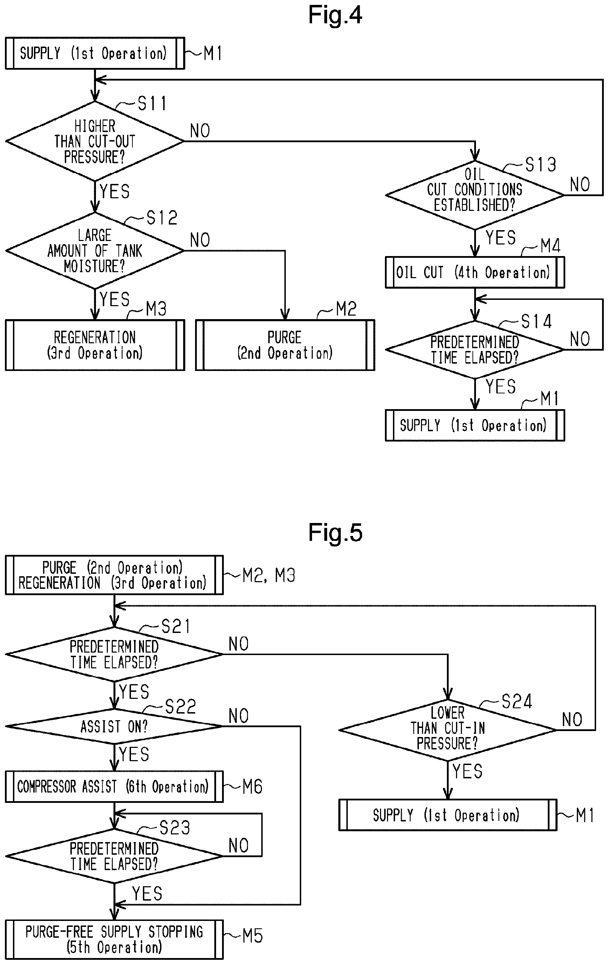

Transitions from the respective operation modes will now be described with reference to Figure 4 to Figure 8.

The ECU 80 performs a supply process of supplying compressed air output from the compressor 4 to the supply circuit 12. The supply process is started, for example, in accordance with a condition such as a time at which the engine is driven. In the supply process, the air drying circuit 11 is in a supply (first operation) mode M1.

As illustrated in Figure 4, in the supply (first operation) mode M1, the ECU 80 determines whether or not the pressure in the supply circuit 12 is higher than the cut-out pressure (step S11). That is, the ECU 80 acquires the pressure of the air tank 30 which the pressure sensor 53 detected, and determines whether or not the pressure has reached the cut-out pressure.

If the ECU 80 determines that the pressure in the supply circuit 12 has reached the cut-out pressure (step S11: Yes), the ECU 80 then determines whether or not the moisture amount in the air tank 30 is large (step S12). That is, since it is necessary to regenerate the desiccant of the filter 17 when the moisture amount in the air tank 30 is equal to or greater than a predetermined value, the ECU 80 determines the moisture amount of the air tank 30.

If the ECU 80 determines that the moisture amount in the air tank 30 is equal to or greater than the predetermined value (step S12: Yes), the ECU 80 transitions to a regeneration (third operation) mode M3 in which dried compressed air stored in the air tank 30 is caused to pass through the filter 17 to regenerate the desiccant of the filter 17.

Further, if the ECU 80 determines that the moisture amount in the air tank 30 is less than the predetermined value (step S12: No), the ECU 80 transitions to a purge (second operation) mode M2 in which dried compressed air present between the downstream check valve 19 and the filter 17 is caused to pass through the filter 17, and moisture and the like trapped by the filter 17 is discharged as drainage from the drainage discharge port 27.

On the other hand, if the ECU 80 determines that the pressure in the supply circuit 12 has not reached the cut-out pressure (step S11: No), the ECU 80 determines whether or not conditions for transitioning to an oil cut (fourth operation) mode M4 are established (step S13). That is, the ECU 80 determines whether or not, as the conditions for transitioning to the oil cut (fourth operation) mode M4, each of a condition that a predetermined time period has elapsed, a condition that the number of times an oil cut operation was performed is less than a specified number of times, and a condition that the operating rate of the compressor 4 is low are established. If the ECU 80 determines that the conditions for transitioning to the oil cut (fourth operation) mode M4 are not established (step S13: No), the ECU 80 returns the processing to step S11.

On the other hand, if the ECU 80 determines that the conditions for transitioning to the oil cut (fourth operation) mode M4 are established (step S13: Yes), the ECU 80 transitions to the oil cut (fourth operation) mode M4 in which compressed air supplied from the compressor 4 is discharged while operating the compressor 4.

After transitioning to the oil cut (fourth operation) mode M4, the ECU 80 determines whether or not a predetermined time period has elapsed (step S14). That is, the ECU 80 performs operations in the oil cut (fourth operation) mode M4 for a predetermined time period. Subsequently, upon determining that the predetermined time period has elapsed (step S14: Yes), the ECU 80 transitions to the supply (first operation) mode M1.

Note that, in the supply (first operation) mode M1, the ECU 80 may determine whether or not the conditions for transitioning to the forced regeneration (eighth operation) mode M8 are established, and if the ECU 80 determines that the conditions for transitioning to the forced regeneration (eighth operation) mode M8 are established, the ECU 80 may transition to the forced regeneration (eighth operation) mode M8 that forcedly regenerates the filter 17.

As illustrated in Figure 5, in the purge (second operation) mode M2 and the regeneration (third operation) mode M3, the ECU 80 determines whether or not a predetermined time period has elapsed (step S21). That is, the ECU 80 performs operations in the purge (second operation) mode M2 and the regeneration (third operation) mode M3 for a predetermined time period.

If the ECU 80 determines that the predetermined time period has not elapsed (step S21: No), the ECU 80 determines whether or not the pressure in the supply circuit 12 is lower than the cut-in pressure (step S24). That is, the ECU 80 acquires the pressure in the air tank 30 which the pressure sensor 53 detected, and determines whether or not the pressure has reached the cut-in pressure.

If the ECU 80 determines that the pressure in the supply circuit 12 has reached the cut-in pressure (step S24: Yes), since there is insufficient dried compressed air, the ECU 80 transitions to the supply (first operation) mode M1. On the other hand, if the ECU 80 determines that the pressure in the supply circuit 12 has not reached the cut-in pressure (step S24: No), the ECU 80 returns the processing to step S21.

On the other hand, if the ECU 80 determines that the predetermined time period has elapsed (step S21: Yes), the ECU 80 determines whether or not compressor assist (sixth operation) processing is enabled (step S22).

If the ECU 80 determines that the compressor assist (sixth operation) processing is disabled (step S22: No), the ECU 80 transitions to a purge-free supply stopping (fifth operation) mode M5 in which the compressor 4 is stopped without purging.

Further, if the ECU 80 determines that the compressor assist (sixth operation) processing is enabled (step S22: Yes), the ECU 80 transitions to a compressor assist (sixth operation) mode M6 in which a pressurization process is performed.

After transitioning to the compressor assist (sixth operation) mode M6, the ECU 80 determines whether or not a predetermined time period has elapsed (step S23). That is, the ECU 80 performs operations in the compressor assist (sixth operation) mode M6 for a predetermined time period. When the ECU 80 determines that the predetermined time period has elapsed (step S23: Yes), the ECU 80 transitions to the purge-free supply stopping (fifth operation) mode M5.

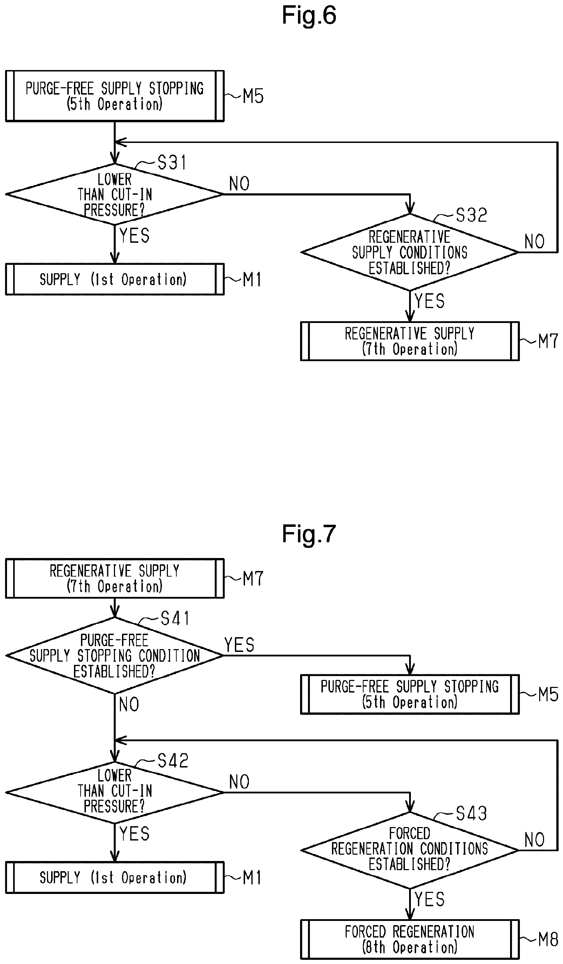

As illustrated in Figure 6, in the purge-free supply stopping (fifth operation) mode M5, the ECU 80 determines whether or not the pressure in the supply circuit 12 is lower than the cut-in pressure (step S31). That is, the ECU 80 acquires the pressure of the air tank 30 which the pressure sensor 53 detected, and determines whether or not the pressure has reached the cut-in pressure.

If the ECU 80 determines that the pressure in the supply circuit 12 has reached the cut-in pressure (step S31: Yes), since there is insufficient dried compressed air, the ECU 80 transitions to the supply (first operation) mode M1.

On the other hand, if the ECU 80 determines that the pressure in the supply circuit 12 has not reached the cut-in pressure (step S31: No), the ECU 80 determines whether or not conditions for transitioning to a regenerative supply (seventh operation) mode M7 are established (step S32). That is, the ECU 80 determines whether or not, as the conditions for transitioning to the regenerative supply (seventh operation) mode M7, each of a condition that the vehicle is traveling, a condition that there is no fuel consumption, and a condition that the pressure in the supply circuit 12 is less than a threshold value are established. If the ECU 80 determines that the conditions for transitioning to the regenerative supply (seventh operation) mode M7 are not established (step S32: No), the ECU 80 returns the processing to step S31.

On the other hand, if the ECU 80 determines that the conditions for transitioning to the regenerative supply (seventh operation) mode M7 are established (step S32: Yes), the ECU 80 transitions to the regenerative supply (seventh operation) mode M7 in which dehumidification (loading) is performed during regenerative operation.

As illustrated in Figure 7, in the regenerative supply (seventh operation) mode M7, the ECU 80 determines whether or not a condition for transitioning to the purge-free supply stopping (fifth operation) mode M5 is established (step S41). That is, the ECU 80 determines whether or not, as a condition for transitioning to the purge-free supply stopping (fifth operation) mode M5, at least one condition among a condition that the pressure in the supply circuit 12 is higher than the cut-out pressure, a condition that a predetermined time period has elapsed, and a condition that fuel consumption of the engine is high is established. If the ECU 80 determines that a condition for transitioning to the purge-free supply stopping (fifth operation) mode M5 is established (step S41: Yes), the ECU 80 transitions to the purge-free supply stopping (fifth operation) mode M5.

On the other hand, if the ECU 80 determines that a condition for transitioning to the purge-free supply stopping (fifth operation) mode M5 is not established (step S41: No), the ECU 80 determines whether or not the pressure in the supply circuit 12 is lower than the cut-in pressure (step S42). That is, the ECU 80 acquires the pressure of the air tank 30 which the pressure sensor 53 detected, and determines whether or not the pressure has reached the cut-in pressure.

If the ECU 80 determines that the pressure in the supply circuit 12 has reached the cut-in pressure (step S42: Yes), since there is insufficient dried compressed air, the ECU 80 transitions to the supply (first operation) mode M1.

On the other hand, if the ECU 80 determines that the pressure in the supply circuit 12 has not reached the cut-in pressure (step S42: No), the ECU 80 determines whether or not conditions for transitioning to a forced regeneration (eighth operation) mode M8 are established (step S43). That is, the ECU 80 determines whether or not, as the conditions for transitioning to the forced regeneration (eighth operation) mode M8, a condition that the pressure in the supply circuit 12 is higher than a threshold value and a condition that the moisture amount in the air tank 30 is large are both established. In the regenerative supply (seventh operation) mode M7, the ECU 80 determines the state of dryness of the dried compressed air according to the moisture amount contained in tank air inside the air tank 30. That is, the moisture amount contained in tank air inside the air tank 30 is an indicator that indicates the state of dryness of the dried compressed air. If the moisture amount contained in tank air is equal to or greater than a predetermined value, the ECU 80 determines that the moisture amount in the air tank 30 is large, while if the moisture amount contained in tank air is less than the predetermined value, the ECU 80 determines that the moisture amount in the air tank 30 is small. If the ECU 80 determines that the conditions for transitioning to the forced regeneration (eighth operation) mode M8 are not established (step S43: No), the ECU 80 returns the processing to step S42.

On the other hand, if the ECU 80 determines that the conditions for transitioning to the forced regeneration (eighth operation) mode M8 are established (step S43: Yes), the ECU 80 transitions to the forced regeneration (eighth operation) mode M8 in which the filter 17 is forcedly regenerated. The ECU 80 executes the forced regeneration (eighth operation) mode M8 that causes the dried compressed air to flow in the reverse direction when it is determined that the moisture amount is large and another condition is established.

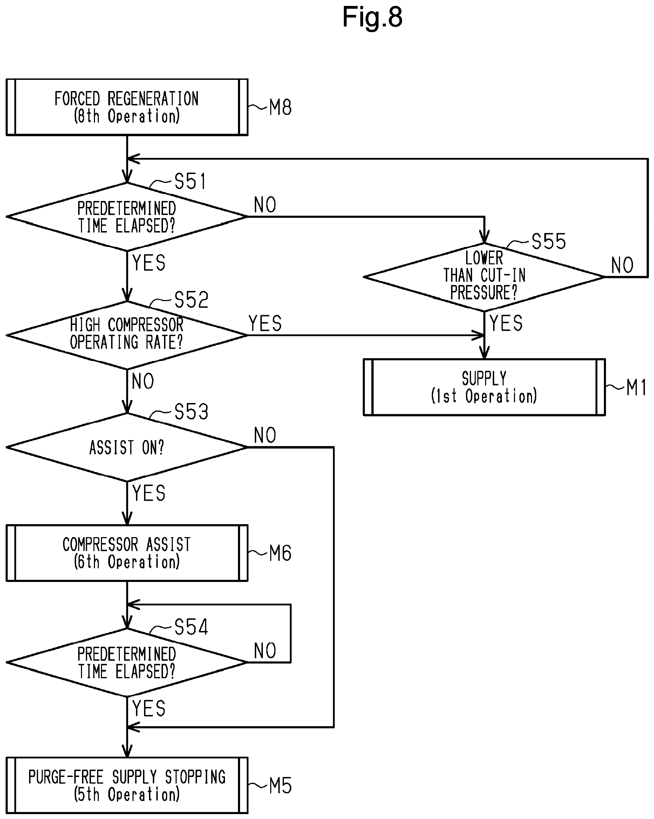

As illustrated in Figure 8, in the forced regeneration (eighth operation) mode M8, the ECU 80 determines whether or not a predetermined time period has elapsed (step S51). That is, the ECU 80 performs operations in the forced regeneration (eighth operation) mode M8 for a predetermined time period.

If the ECU 80 determines that the predetermined time period has not elapsed (step S51: No), the ECU 80 determines whether or not the pressure in the supply circuit 12 is lower than the cut-in pressure (step S55). That is, the ECU 80 acquires the pressure in the air tank 30 which the pressure sensor 53 detected, and determines whether or not the pressure has reached the cut-in pressure.

If the ECU 80 determines that the pressure in the supply circuit 12 has reached the cut-in pressure (step S55: Yes), since there is insufficient dried compressed air, the ECU 80 transitions to the supply (first operation) mode M1. On the other hand, if the ECU 80 determines that the pressure in the supply circuit 12 has not reached the cut-in pressure (step S55: No), the ECU 80 returns the processing to step S51.

On the other hand, if the ECU 80 determines that the predetermined time period has elapsed (step S51: Yes), ECU 80 determines whether or not the operating rate of the compressor 4 is high (step S52). That is, the ECU 80 determines whether or not the load during driving of the compressor 4 is high based on the operating rate of the compressor 4.

If the ECU 80 determines that the operating rate of the compressor 4 is high (step S52: Yes), because it is not necessary to perform the compressor assist operation (sixth operation), the ECU 80 transitions to the supply (first operation) mode M1.

On the other hand, if the ECU 80 determines that the operating rate of the compressor 4 is low (step S52: No), in order to perform the compressor assist operation (sixth operation), the ECU 80 determines whether or not the compressor assist (sixth operation) processing is enabled (step S53).

If the ECU 80 determines that the compressor assist (sixth operation) processing is disabled (step S53: No), the ECU 80 transitions to the purge-free supply stopping (fifth operation) mode M5. Further, if the ECU 80 determines that the compressor assist (sixth operation) processing is enabled (step S53: Yes), the ECU 80 transitions to the compressor assist (sixth operation) mode M6.

After transitioning to the compressor assist (sixth operation) mode M6, the ECU 80 determines whether or not a predetermined time period has elapsed (step S54). That is, the ECU 80 operates in the compressor assist (sixth operation) mode M6 for a predetermined time period. When the ECU 80 determines that the predetermined time period has elapsed (step S54: Yes), the ECU 80 transitions to the purge-free supply stopping (fifth operation) mode M5.

Next, advantageous effects of the present embodiment will be described.

(1) During the regenerative supply operation (seventh operation), whether or not to execute the forced regeneration operation (eighth operation) is determined based on the determination result regarding the state of dryness of the dried compressed air. Therefore, when the regenerative supply operation (seventh operation) is executed and regeneration of the desiccant is insufficient, the forced regeneration operation (eighth operation) is executed. Thus, a decrease in the performance of the desiccant can be suppressed.

(2) When the pressure in the supply circuit 12 has not reached the cut-out pressure and the state of dryness of the dried compressed air does not satisfy a predetermined condition such as a predetermined value, that is, when an indicator that indicates the state of dryness of the dried compressed air is not within a predetermined range, by executing the forced regeneration (eighth operation), the desiccant is regenerated and a decrease in the performance of the desiccant can be suppressed.

(3) By determining the state of dryness of the dried compressed air based on the humidity and the temperature, the state of dryness of the dried compressed air can be reliably determined.

(4) The regeneration operation (third operation) and the regenerative supply operation (seventh operation) can be performed by the ECU 80 performing control of the drainage discharge valve 25 and the regeneration control valve 21.

(Other Embodiments)

The embodiment described above can be modified and implemented as follows. The embodiment described above and the following modifications can be implemented in combination with each other within a range in which there is no technical contradiction therebetween.

- In the embodiment described above, the moisture amount contained in tank air is calculated based on the moisture reference amount contained in tank air and the amount of change in moisture contained in tank air or the like. However, the moisture amount contained in tank air may be estimated based on the humidity and the temperature of the dried compressed air in the air tank 30.

- In the embodiment described above, a configuration is adopted so that the purge (second operation) mode M2, the regeneration (third operation) mode M3, the oil cut (fourth operation) mode M4, the compressor assist (sixth operation) mode M6, the regenerative supply (seventh operation) mode M7, and the forced regeneration (eighth operation) mode M8 are performed for a predetermined time period, respectively. However, the predetermined time period for each mode may be arbitrarily set.

- In step S13 of the embodiments described above, the condition for transitioning to the oil cut (fourth operation) mode M4 is that a condition that the number of times an oil cut operation was performed is less than a specified number of times, and a condition that the operating rate of the compressor 4 is low are each established. Instead of this, the ECU 80 may transition to the oil cut (fourth operation) mode M4 when at least one of these conditions is established. That is, in step S13, as the condition for transitioning to the oil cut (fourth operation) mode M4, the ECU 80 determines whether or not at least one condition among a condition that a predetermined time period has elapsed, a condition that the number of times an oil cut operation was performed is less than a specified number of times, and a condition that the operating rate of the compressor 4 is low is established.

- In step S32 of the embodiments described above, the condition for transitioning to the regenerative supply (seventh operation) mode M7 is that each of a condition that the vehicle is traveling, a condition that there is no fuel consumption, and a condition that the pressure in the supply circuit 12 is less than a threshold value are established. Instead of this, the ECU 80 may transition to the regenerative supply (seventh operation) mode M7 when at least one of these conditions is established. That is, in step S32, as the condition for transitioning to the regenerative supply (seventh operation) mode M7, the ECU 80 determines whether or not at least one condition among a condition that the vehicle is traveling, a condition that there is no fuel consumption, and a condition that the pressure in the supply circuit 12 is less than a threshold value is established.

- In step S43 of the embodiments described above, the condition for transitioning to the forced regeneration (eighth operation) mode M8 is that a condition that the pressure in the supply circuit 12 is higher than a threshold value and a condition that the moisture amount in the air tank 30 is large are both established. Instead of this, the ECU 80 may transition to the forced regeneration (eighth operation) mode M8 when at least the condition that the moisture amount in the air tank 30 is large is established. That is, in step S43, as the condition for transitioning to the forced regeneration (eighth operation) mode M8, the ECU 80 determines whether or not the condition that the moisture amount in the air tank 30 is large is established.

- Although in the embodiments described above the filter 17 includes the oil trap portion, the oil trap portion may be omitted from the filter 17.
- In the embodiments described above, the air drying circuit is not limited to the configuration described above. In short, it suffices that the air drying circuit has a configuration capable of executing the supply (first operation) mode M1, the regenerative supply (seventh operation) mode M7, the regeneration (third operation) mode M3, and the forced regeneration (eighth operation) mode M8. Therefore, the air drying circuit is not a circuit for which the purge (second operation) mode M2, the oil cut (fourth operation) mode M4, the purge-free supply stopping (fifth operation) mode M5, and the compressor assist (sixth operation) mode M6 are essential operations.

- In the embodiments described above, the air supply system 10 is described as a system installed in a vehicle such as a truck, a bus, or a construction machine. As an aspect other than this, the air supply system may be installed in another vehicle such as a passenger car or a railway vehicle.

- The ECU 80 is not limited to a control unit that performs all the processes to be executed by it based on software processing. For example, the ECU 80 may include a dedicated hardware circuit (for example, an application specific integrated circuit (ASIC)) that performs hardware processing for at least a part of the processing to be executed by the ECU 80. That is, the ECU 80 may be configured as circuitry including 1) one or more processors operating according to computer programs (software), 2) one or more dedicated hardware circuits for executing at least some processing among various types of processing, or 3) a combination of the processors) and the dedicated hardware circuit(s). The processor includes a CPU and memories such as a RAM and a ROM, and the memories store program codes or instructions that are configured to cause the CPU to execute processing. The memories, that is, computer-readable media, include any available media that are accessible by general-purpose or dedicated computers.

Next, technical ideas which can be grasped from the above embodiment will be described together with advantageous effects thereof.

An air supply system includes: an air drying circuit provided between a compressor for sending compressed air by using motive power of an engine as a driving source and an air tank for storing dried compressed air, the air drying circuit having a filter including a desiccant for capturing moisture; and a control device for controlling the air drying circuit; wherein the control device is configured so that, when the pressure of the dried compressed air does not reach a predetermined pressure and a state of dryness of the dried compressed air does not satisfy a predetermined condition, the control device executes a regeneration operation that causes the dried compressed air stored in the air tank to pass through the filter in a reverse direction and discharges, from a discharge port, a fluid that passes through the filter.

When supply and consumption of the dried compressed air are performed and the pressure in the supply circuit does not reach a predetermined pressure and the supply of the dried compressed air is continued, the drying capacity of the filter decreases. Therefore, according to the configuration described above, by executing the regeneration operation when the pressure in the supply circuit does not reach a predetermined pressure and the state of dryness of the dried compressed air does not satisfy a predetermined condition, the desiccant can be regenerated and a decrease in the performance of the desiccant can be suppressed.

DESCRIPTION OF THE REFERENCE NUMERALS

4...compressor, 10...air supply system, 11...air drying circuit, 12...supply circuit, 15...upstream check valve, 16...branch passage, 17...filter, 18...air supply passage, 19...downstream check valve, 20...bypass channel, 21...regeneration control valve, 22...orifice, 25...drainage discharge valve, 26A...governor, 26B...unloading control valve, 27...drainage discharge port as a discharge port, 30...air tank, 50...pressure sensor, 51...humidity sensor, 52...temperature sensor, 53...pressure sensor, 80...ECU, 80A...storage portion, E61 to E67...wiring.

Claims

1. An air supply system, comprising:

    an air drying circuit provided between a compressor for sending compressed air by using motive power of an engine as a driving source, and an air tank for storing dried compressed air, the air drying circuit having a filter including a desiccant for capturing moisture; and
    a control device for controlling the air drying circuit;
    wherein:
    the control device is configured to, during a regenerative supply operation in which the compressor is driven when the engine is in a no-load state and the compressed air is sent to the filter and supplied to the air tank, determine whether or not to execute a regeneration operation which causes the dried compressed air stored in the air tank to pass through the filter in a reverse direction and discharges, from a discharge port, a fluid that passes through the filter, based on a determination result obtained by determining a state of dryness of the dried compressed air.

2. The air supply system according to claim 1, wherein:
    the control device is configured to execute the regeneration operation when a pressure of the dried compressed air reaches a cut-out pressure at which the regeneration operation is performed, and to execute the regeneration operation when the pressure of the dried compressed air does not reach the cut-out pressure and a state of dryness of the dried compressed air does not satisfy a predetermined condition.

3. The air supply system according to claim 1 or 2, wherein:
    the control device is configured to determine a state of dryness of the dried compressed air based on a humidity and a temperature of the dried compressed air stored in the air tank.

4. The air supply system according to any one of claims 1 to 3, comprising:

a discharge valve that allows a branch passage connected to the air drying circuit, and the discharge port to communicate with each other; and
a regeneration control valve that switches between a flow in a forward direction from the filter toward the air tank and a flow in a reverse direction from the air tank toward the filter;
wherein the control device is configured to control the discharge valve and the regeneration control valve.

5. A control method for an air supply system that comprises:

an air drying circuit provided between a compressor for sending compressed air by using motive power of an engine as a driving source, and an air tank for storing dried compressed air, the air drying circuit having a filter including a desiccant for capturing moisture; and
a control device for controlling the air drying circuit;
the method comprising:
during a regenerative supply operation in which the compressor is driven when the engine is in a no-load state and the compressed air is sent to the filter and supplied to the air tank, by the control device, determining whether or not to execute a regeneration operation which causes the dried compressed air stored in the air tank to pass through the filter in a reverse direction and discharges, from a discharge port, a fluid that passes through the filter, based on a determination result obtained by determining a state of dryness of the dried compressed air.

6. A control program for an air supply system comprising:

an air drying circuit provided between a compressor for sending compressed air by using motive power of an engine as a driving source, and an air tank for storing dried compressed air, the air drying circuit having a filter including a desiccant for capturing moisture; and a control device for controlling the air drying circuit;
wherein the control program causes the control device to function as a regeneration operation execution determination portion that, during a regenerative supply operation in which the compressor is driven when the engine is in a no-load state and the compressed air is sent to the filter and supplied to the air tank, determines whether or not to execute a regeneration operation which causes the dried compressed air stored in the air tank to pass through the filter in a reverse direction and discharges, from a discharge port, a fluid that passes through the filter, based on a determination result obtained by determining a state of dryness of the dried compressed air.

Fig.1

Fig.2A

Fig.2B

COMPRESSOR 4:                 ON
REGENERATION CONTROL VALVE 21:CLOSE
GOVERNOR 26A:             CLOSE
UNLOADING CONTROL VALVE 26B:  CLOSE

COMPRESSOR 4:                 OFF
REGENERATION CONTROL VALVE 21:CLOSE
GOVERNOR 26A:             OPEN
UNLOADING CONTROL VALVE 26B:  OPEN

Fig.2C

Fig.2D

COMPRESSOR 4:                 OFF
REGENERATION CONTROL VALVE 21:OPEN
GOVERNOR 26A:             OPEN
UNLOADING CONTROL VALVE 26B:  OPEN

COMPRESSOR 4:                 ON
REGENERATION CONTROL VALVE 21:CLOSE
GOVERNOR 26A:             OPEN→CLOSE
UNLOADING CONTROL VALVE 26B:  CLOSE

Fig.2E

Fig.2F

COMPRESSOR 4:                 OFF
REGENERATION CONTROL VALVE 21:CLOSE
GOVERNOR 26A:             CLOSE
UNLOADING CONTROL VALVE 26B:  OPEN

COMPRESSOR 4:                 OFF
REGENERATION CONTROL VALVE 21:OPEN
GOVERNOR 26A:             CLOSE
UNLOADING CONTROL VALVE 26B:  OPEN

Fig.3

EP 3 932 524 A1

## Fig.4

## Fig.5

## Fig.6

```
┌─────────────────────────────┐
│ PURGE-FREE SUPPLY STOPPING  │~M5
│       (5th Operation)       │
└─────────────────────────────┘
              │
              ▼         ~S31
           ╱LOWER╲              NO
          ╱ THAN CUT-IN╲──────────────────┐
          ╲ PRESSURE? ╱                    │
           ╲       ╱                       ▼      ~S32
              │ YES                     ╱REGENERATIVE╲     NO
              ▼                        ╱ SUPPLY CONDITIONS╲────┐
    ┌──────────────────┐              ╲ ESTABLISHED? ╱
    │ SUPPLY (1st Operation)│~M1        ╲          ╱
    └──────────────────┘                   │ YES
                                           ▼
                              ┌─────────────────────┐
                              │ REGENERATIVE SUPPLY │~M7
                              │    (7th Operation)  │
                              └─────────────────────┘
```

## Fig.7

```
┌─────────────────────────┐
│   REGENERATIVE SUPPLY   │~M7
│     (7th Operation)     │
└─────────────────────────┘
             │
             ▼          ~S41
         ╱PURGE-FREE╲            YES
        ╱SUPPLY STOPPING CONDITION╲──────────┐
        ╲  ESTABLISHED? ╱                      ▼
         ╲          ╱              ┌─────────────────────────────┐
             │ NO                  │ PURGE-FREE SUPPLY STOPPING  │~M5
             │                     │       (5th Operation)       │
             ▼          ~S42       └─────────────────────────────┘
         ╱LOWER╲              NO
        ╱ THAN CUT-IN╲──────────────────┐
        ╲ PRESSURE? ╱                    │
         ╲       ╱                       ▼      ~S43
             │ YES                    ╱FORCED╲          NO
             ▼                       ╱REGENERATION CONDITIONS╲──┐
   ┌──────────────────┐             ╲ ESTABLISHED? ╱
   │ SUPPLY (1st Operation)│~M1       ╲          ╱
   └──────────────────┘                   │ YES
                                          ▼
                             ┌─────────────────────┐
                             │ FORCED REGENERATION │~M8
                             │    (8th Operation)  │
                             └─────────────────────┘
```

# Fig.8

**INTERNATIONAL SEARCH REPORT**

| | International application No. |
|---|---|
| | PCT/JP2020/007466 |

A. CLASSIFICATION OF SUBJECT MATTER
B01D 53/26(2006.01)i; B60T 17/00(2006.01)i; F04B 41/02(2006.01)i
FI: B01D53/26 230; F04B41/02 A; B60T17/00 B
According to International Patent Classification (IPC) or to both national classification and IPC

B. FIELDS SEARCHED

Minimum documentation searched (classification system followed by classification symbols)
B01D53/26; B60T17/00; F04B41/02

Documentation searched other than minimum documentation to the extent that such documents are included in the fields searched
  Published examined utility model applications of Japan      1922–1996
  Published unexamined utility model applications of Japan     1971–2020
  Registered utility model specifications of Japan             1996–2020
  Published registered utility model applications of Japan     1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | Microfilm of the specification and drawings annexed to the request of Japanese Utility Model Application No. 027418/1991 (Laid-open No. 118130/1992) (NISSAN DIESEL MOTOR CO., LTD.) 22.10.1992 (1992-10-22) claim 1, paragraphs [0008]–[0009], [0021], fig. 1 | 1-3, 5-6<br>4 |
| Y | WO 2018/105711 A1 (NABTESCO AUTOMOTIVE CORPORATION) 14.06.2018 (2018-06-14) paragraph [0040], fig. 2 | 4 |
| Y | JP 2017-144871 A (NABTESCO AUTOMOTIVE CORPORATION) 24.08.2017 (2017-08-24) paragraph [0031], fig. 2 | 4 |

☐ Further documents are listed in the continuation of Box C.    ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 01 May 2020 (01.05.2020) | 19 May 2020 (19.05.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**
Information on patent family members

International application No.

PCT/JP2020/007466

| Patent Documents referred in the Report | Publication Date | Patent Family | Publication Date |
|---|---|---|---|
| JP 4-118130 U1 | 22 Oct. 1992 | (Family: none) | |
| WO 2018/105711 A1 | 14 Jun. 2018 | EP 3552894 A1 paragraph [0042], fig. 2 | |
| JP 2017-144871 A | 24 Aug. 2017 | (Family: none) | |

Form PCT/ISA/210 (patent family annex) (January 2015)

EP 3 932 524 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010201323 A